# EUROPÄISCHE PATENTSCHRIFT

(11) **EP 3 687 879 B1**
(45) Veröffentlichungstag und Bekanntmachung des Hinweises auf die Patenterteilung: **07.06.2023**
(21) Anmeldenummer: 18793560.6
(22) Anmeldetag: 08.10.2018
(51) Int. Cl.: B61L 25/02, B61L 15/00, B61L 27/70, G01S 1/02, G01S 1/20, G01S 5/02, G01S 5/10

(54) **SCHIENENFAHRZEUGORTUNG**
LOCATING OF RAIL VEHICLES
LOCALISATION DE VÉHICULE FERROVIAIRE

(30) Priorität: 06.11.2017 DE 102017219643
(43) Veröffentlichungstag der Anmeldung: 05.08.2020
(73) Patentinhaber: Siemens Mobility GmbH, 81739 München (DE)
(72) Erfinder: KENDELBACHER, Detlef, 13129 Berlin (DE); STEIN, Fabrice, 12621 Berlin (DE)
(74) Vertreter: Siemens Patent Attorneys
(86) Internationale Anmeldenummer: PCT/EP2018/077256
(87) Internationale Veröffentlichungsnummer: WO 2019/086208

(56) Entgegenhaltungen:
- EP-A1- 2 752 354
- EP-A2- 2 085 286
- WO-A1-01/87685
- WO-A1-99/15911
- WO-A1-2004/028881
- WO-A1-2005/056363
- WO-A1-2017/102128

## Beschreibung

Die Erfindung bezieht sich auf ein Verfahren zum Erzeugen zumindest eines den Ort eines Schienenfahrzeugs angebenden Ortungssignals.

Bekanntermaßen gibt es verschiedene fahrzeugseitige Ortungsverfahren, um die Position von Schienenfahrzeugen in der Gleisanlage zu bestimmen. Auf der Basis von unterschiedlichen Sensordaten, wie beispielsweise Wegimpulsgebern, Radaren, Beschleunigungsmessern, elektronischen Ortsmarken (Balisen) und GPS-Empfängern können Bordrechner die genaue Position des Zuges ermitteln und dessen Geschwindigkeit steuern.

Bei Zugsicherungssystemen ist die Ortsbestimmung sicherheitsrelevant, da die zulässige Geschwindigkeit eines Zuges vom Betriebszustand und der Zugposition abhängt. Vor Gefahrenpunkten, wie beispielsweise Signalen, die die vorausliegende Strecke sperren, muss ein Zugsicherungssystem den Zug sicher anhalten.

Neben der Sicherheitsrelevanz bestehen an die Fahrzeugortung hohe Verfügbarkeits- und Genauigkeitsanforderungen, damit der Zugverkehr jederzeit zuverlässig und pünktlich abgewickelt werden kann.

Die Anforderungen an Sicherheit, Genauigkeit und Verfügbarkeit stellen die derzeit verfügbaren Ortungssysteme in Bahnfahrzeugen vor eine Vielzahl an Problemen, von denen nachfolgend einige näher beschrieben werden:
1. Die zurzeit verfügbaren Ortungssensoren besitzen spezifische Eigenschaften, Stärken und Schwächen. Je höher die Anforderungen an die Ortung sind, je mehr unterschiedliche Sensortypen werden im Fahrzeug benötigt. Jeder zusätzliche Ortungssensor im Fahrzeug bedeutet zusätzliche Kosten für die Entwicklung, Beschaffung, Installation und Wartung.
2. Ortungssensoren besitzen Toleranzen, die spezifisch für den Sensor, seine Umgebung und das verwendete physikalische Prinzip sind. Oft sind die Toleranzen auch von Umwelteinflüssen und technischem Zustand der Anlage oder Verschleiß des Sensors abhängig.
3. Ortungssensoren können zeitweise ausfallen oder falsche Messwerte liefern. Beispiele dafür sind Wegimpulsgeber an angetriebenen oder gebremsten Fahrzeugachsen, vereiste Radare im Winterbetrieb oder GPS-Empfänger im Tunnel. Fehlmessungen müssen sicher erkannt und zeitweise Sensorausfälle überbrückt werden. Bei nichtverfügbaren Sensordaten verringert sich die Genauigkeit der Ortung oder diese fällt komplett aus.
4. Streckenseitige Ortungseinrichtungen, wie beispielsweise Kabel im Gleis (Linienleiter) oder Balisen sind aufwändig in der Installation und Wartung. Außerdem bestehen Risiken für Diebstahl und Beschädigung. Bahnbetreiber ziehen deswegen Lösungen vor, die ohne zusätzliche Ortungskomponenten im Gleis auskommen.
5. Verschiedene Ortungssensoren weisen Risiken hinsichtlich ihrer Sicherheit (fachsprachlich auch "Security" genannt) auf. Im Gleis verlegte Balisen können mechanisch oder elektronisch manipuliert werden. Mittels GPS-Spoofing kann der GPS-Empfang in Zügen mit einfachen Mitteln verfälscht werden. Insbesondere für standardisierte und verbreitete Funksysteme sind Angriffsmethoden bekannt und einfach zugänglich. Indem Angriffe anonym, mit geringem finanziellem Aufwand und durch vorhandene Tools einfach sind, erhöht sich insbesondere die Wahrscheinlichkeit dafür, dass Bahnsysteme, die GPS nutzen, zunehmend Cyberattacken ausgesetzt sind. Diversität von Ortungssensoren ist deshalb (auch für "low-budget"-Projekte) erforderlich.
6. Bahnsysteme mit sicherheitskritischer Ortung sollten auf mindestens zwei unabhängigen Sensoren basieren. Die von verschiedenen Ortungssensoren gelieferten Daten sollten permanent plausibilisiert werden, um deren Vertrauenswürdigkeit zu prüfen. Mehrsensorsysteme mit drei oder mehr unterschiedlichen Ortungssensoren können das resultierende Vertrauensintervall der Ortung nach komplexen Algorithmen (Sensorfusion) berechnen. Wachsen diese Vertrauensintervalle über ein bestimmtes Maß an, sind betriebliche Einschränkungen für den Bahnverkehr die Folge.

Dokument WO 01/87685 A1 betrifft ein Verfahren zum Bestimmen der Position eines Schienenfahrzeugs, das auf einem Eisenbahnsystem fährt. Eine im Schienenfahrzeug vorhandene Benutzervorrichtung, die mit einer Empfänger- und / oder Sendeeinheit versehen ist, kontaktiert mindestens eine zugängliche Kommunikationsstation eines Mobilfunkkommunikationssystems, wodurch eine Standortinformation erhalten wird.

Dokument EP 2 752 354 A1 beschreibt ein Zugsteuersystem, welches einen nachfolgenden Zug ohne Halt fahren lässt, selbst in dem Fall, in dem das Einfahren in den Streckenabschnitt eines vorhergehenden Zuges und eines nachfolgenden Zuges unterschiedlich ist. Das Zugsteuersystem umfasst eine Bordvorrichtung, die in einem Zug montiert ist und ein Fahrzeugfunkgerät, das Informationen der Bordvorrichtung sendet und empfängt sowie Funkgeräte am Streckenrand, von denen jedes an einem vorbestimmten Ort angeordnet ist, um Informationen an das Fahrzeugfunkgerät zu senden und Informationen von diesem zu empfangen.

Dokument WO 99/15911 beschreibt ein Verfahren und ein System, durch welche eine Laufzeitberechnung verwendet wird, um die Entfernung zwischen einer Mobilfunkstation und einer Funkbasisstation zu bestimmen unter Verwendung von Uplink- und Downlink-Signalausbreitungszeiten. Die Mobilfunkstation und Basisstation melden einem Serviceknoten im Mobilfunknetz die lokalen Absende- und Ankunftszeiten der Uplink- und Downlinksignale und berechnen die Laufzeiten.

Der Erfindung liegt die Aufgabe zugrunde, ein einfaches, aber dennoch zuverlässiges Verfahren zum Erzeugen zumindest eines den Ort eines Schienenfahrzeugs angebenden Ortungssignals anzugeben.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass Laufzeitmesswerte, die die Laufzeit von Funksignalen zwischen einer oder mehreren Basisstationen eines oder mehrerer zellularer Mobilfunknetze einerseits und einer Mobilfunkeinrichtung des Schienenfahrzeugs andererseits angeben, schienenfahrzeugseitig erfasst werden und anhand der Laufzeitmesswerte ein funkbasiertes Ortungssignal erzeugt wird, ein Ortungssignal einer anderen Ortungseinrichtung überprüft wird und/oder die Authentizität der die Funksignale sendenden Basisstation oder Basisstationen überprüft wird.

Ein wesentlicher Vorteil des erfindungsgemäßen Verfahrens besteht darin, dass dieses unter Verwendung verfügbarer marktgängiger Komponenten durchführbar ist und eine preisgünstige, sichere und robuste Fahrzeugortung ermöglicht.

Besonders geeignet ist das Verfahren für die Plausibilisierung der Ortungsdaten anderer Ortungssensoren im Fahrzeug. Durch die Integration mit weiteren Ortungssensoren im Fahrzeug kann das Vertrauen in die von weiteren Sensoren gelieferten Daten gestützt werden, so dass das erreichte Sicherheitsniveau insgesamt steigt.

Vorteilhaft ist es, wenn das Verfahren durch eine integrierte Plausibilisierung gegen Cyberangriffe auf den Mobilfunk geschützt wird.

Das Verfahren wird vorzugsweise bei Industriebahnen oder Bahnstrecken in ländlichen Gebieten eingesetzt.

Das Verfahren wird vorzugsweise auf der Basis von GSM-Mobilfunk durchgeführt. GSM-Mobilfunkgeräte scannen üblicherweise kontinuierlich die vorhandene ortsfeste GSM-Infrastruktur, um die für den Gerätestandort geeignetste GSM-Basisstation zu finden. Um mit unterschiedlich entfernten GSM-Basisstationen zeitsynchron zu kommunizieren, wird im GSM-Mobilfunk ein Verfahren zur Sendezeitregelung verwendet, bei dem ein sogenannter TA-Parameter (Timing Advance - TA), dessen Wert auf dem Ergebnis der Zeitmessung der Funksignale zwischen Mobilfunkgerät und Basisstation beruht, genutzt wird. Der TA-Parameter ist ein möglicher Laufzeitmesswert, auf dessen Basis das erfindungsgemäße Ortungsverfahren durchgeführt werden kann.

Bereits beim ersten Zugriff eines GSM-Mobilfunkgeräts auf das GSM-Netzwerk mittels Random Access Channel (RACH) misst die GSM-Basisstation die Signallaufzeit und sendet an das Mobilfunkgerät einen TA-Wert, der dem Abstand zur Basisstation entspricht. Der TA-Wert wird im GSM-Mobilfunk mit einer Auflösung von 550 Metern und einer maximalen Distanz von 32,5 Kilometern angegeben. Er wird innerhalb des Mobilfunksystems zyklisch aktualisiert und vom Mobilfunkgerät dazu genutzt, um den genauen Zeitpunkt für das Senden von Daten an die jeweilige Basisstation zu bestimmen, womit das Senderegime aller Mobilfunkgeräte in einer GSM-Mobilfunkzelle synchronisiert wird. Zusammen mit dem TA-Wert wird die Kennung "Cell-ID" der Basisstation (BTS) an das Mobilfunkgerät gesendet, womit die TA-Werte den unterschiedlichen empfangbaren Basisstationen eindeutig zugeordnet werden können.

Meistens hat ein Mobilfunkgerät im GSM-Netz zu einem Zeitpunkt Kontakt zu mehreren Basisstationen und ermittelt anhand der Qualität der empfangenen Signale laufend diejenige Basisstation, welche die aktuell besten Empfangsbedingungen bietet, um bei Bedarf einen Zellwechsel (Handover) auf eine andere Basisstation durchführen zu können. Dadurch sind im Mobilfunkgerät laufend TA-Werte und Cell-IDs der empfangbaren Basisstationen verfügbar.

Die jeweils im GSM-Netz ermittelten TA-Werte aller empfangenen Basisstationen können für das Verfahren zusammen mit den Kennungen der Basisstationen zyklisch entweder innerhalb des Mobilfunkgerätes an einen Applikationsrechner oder geräteextern an einen Bordrechner ausgegeben werden. Die Ausgabe (Abfrage der dem Mobilfunkgerät bekannten TA-Werte) kann beispielsweise über die Standardschnittstelle zur Steuerung des Mobilfunkgeräts (AT-Schnittstelle) erfolgen.

Eine mögliche Realisierungsbasis zur Gewinnung der TA-Werte bildet ein Mobilfunkgerät, welches über eine geeignete Applikationsschnittstelle verfügt (M2M - Machine to Machine Interface, siehe beispielsweise https://osmocom.org/projects/ quectel-modems/wiki/Quectel) .

Die bei GSM verwendeten TA-Werte bilden nur eine von vielen Möglichkeiten für die Bildung von Laufzeitmesswerten. In weiteren Mobilfunkstandards wie beispielsweise UMTS und LTE können statt TA-Werten gleichwertige oder präzisere laufzeitabhängige Parameter genutzt werden (RTT - Round Trip Time, RTD - Round Trip Delay). Vorteilhaft für die Nutzung der laufzeitabhängigen Parameter ist deren Verfügbarkeit am M2M Interface.

Für das Verfahren kann im Applikationsrechner des Mobilfunkgeräts oder im Bordrechner des Fahrzeugs ein streckenspezifischer Streckenatlas (Almanach) für die zu befahrenden Bahnstrecken vorgesehen werden. Der Almanach kann während der Zugfahrt schrittweise aufgebaut und gepflegt werden. Dazu können die zyklisch eintreffenden Laufzeitmessewerte zusammen mit den Cell-IDs im Applikationsrechner des Mobilfunkgeräts oder im Bordrechner laufend ausgewertet werden.

Der Almanach kann in zwei unterschiedlichen Formen aufgebaut werden: als eindimensionaler Streckenatlas (1D-Almanach, Streckendatensatz) oder als zweidimensionaler Streckenatlas (2D-Almanach, Landkartendatensatz).

Ein 1D-Almanach kann aus einer Vielzahl von empfangenen und nacheinander abgespeicherten Laufzeitmesswerten (z. B. TA-Werten) und Zellen-IDs unterschiedlicher Basisstationen bestehen. Gemeinsam mit den abgespeicherten Laufzeitmesswerten (z. B. TA-Werten) werden vorzugsweise jeweils die aktuellen Ortungsdaten des Zuges aus einem anderen Ortungssystem wie beispielsweise GPS oder TETRA R2 abgelegt. Falls GPS oder TETRA R2 zeitweise keine Ortungsdaten liefert, können die Daten anderer Ortungssensoren, wie beispielsweise Radar, Wegimpulsgeber oder Balisen für die Datenablage im 1D-Almanach genutzt werden.

Prinzipiell können alle empfangenen Laufzeitmesswerte (z. B. TA-Werte) erfasst und verwaltet werden. Für die praktische Anwendung hat sich herausgestellt, dass für den Aufbau des 1D-Almanach ein Teil der empfangenen Laufzeitmesswerte (z. B. TA-Werte) vollkommen ausreichend ist. Somit können die empfangenen Laufzeitmesswerte geeignet gefiltert werden, beispielsweise nach zeitlichen Kriterien. Vorteilhaft ist es weiterhin, die Laufzeitmesswerte jeweils für diskrete Wegpunkte, beispielsweise im Intervall von 100 Metern aufzuzeichnen, um die Datenmenge sinnvoll zu beschränken. Zu den diskreten Wegpunkten werden jeweils alle oder mehrere aktuelle Laufzeitmesswerte abgespeichert.

Im Ergebnis kann so im Laufe der Fahrt ein 1D-Almanach in Form eines eindimensionalen Streckenatlas mit einer Vielzahl von diskreten Stützstellen entstehen, die ein verlaufsspezifisches Muster von Laufzeitmesswerten (z. B. TA-Werten) und Zellen(Cell)-IDs aufweisen.

Zu Beginn der Verfahrensdurchführung kann der 1D-Almanach beispielsweise leer sein. Er dann kann im Laufe der Fahrt über die Bahnstrecke aufgebaut und mit Daten gefüllt werden. Bei wiederholten Fahrten über die gleiche Strecke wird der 1D-Almanach vorzugsweise gepflegt, indem die neu gelieferten Laufzeitmesswerte an den jeweiligen Ortungspunkten mit den bereits im Almanach eingetragenen Laufzeitmesswerten verglichen werden. Hierfür ist es empfehlenswert, für die im Almanach abgespeicherten Laufzeitmesswerte Attribute zu verwalten, mit denen deren Vertrauenswürdigkeit bewertet wird. Werden beispielsweise die Laufzeitmesswerte an einem Ortungspunkt bei mehreren Fahrten wiederholt übereinstimmend ermittelt, erhöht sich das Vertrauen in diese Werte. Bei Nichtübereinstimmung oder fehlenden Laufzeitmesswerten sinkt das Vertrauen. Werden gespeicherte Laufzeitmesswerte mehrfach nicht bestätigt, sollten diese aus dem Almanach gelöscht werden.

Im 2D-Almanach können - alternativ oder zusätzlich - für spezifische Bahnstrecken statt der Laufzeitmesswerte (d. h. Abstände zu Basisstationen) durch Triangulation ermittelte Ortskoordinaten der empfangbaren GSM-Basisstationen permanent abgelegt werden.

Um die Standorte der Basisstationen zu ermitteln, werden an verschiedenen Orten der Bahnstrecke vorzugsweise die mittels GPS oder TETRA R2 an der aktuellen Zugposition ermittelten Ortungsdaten des Zuges sowie die dort ermittelten Laufzeitmesswerte und Cell-IDs der jeweiligen Basisstationen temporär abgelegt.

Vorteilhaft ist es, wenn die verschiedenen Orte der Bahnstrecke einen ausreichenden Abstand zueinander haben.

Stehen in der temporären Ablage zu mindestens drei Ortskoordinaten die jeweiligen Laufzeitmesswerte bezüglich derselben Basisstation zur Verfügung, so kann mit diesen Werten eine echte Triangulation durchgeführt werden. Im Ergebnis der Triangulation wird der Standort der Basisstation mit der verfahrenseigenen Toleranz bestimmt.

Aufgrund der in den Laufzeitmesswerten (z. B. TA-Werten) enthaltenen Verfahrensungenauigkeit müssen auch die von anderen Sensoren (z. B. GPS-Sensoren) gelieferten Ortungsdaten nicht hochgenau sein, so dass preiswerte GPS-Empfänger, beispielsweise im GSM-Mobilfunkgerät integriert, hierfür ausreichen.

Die resultierende Standortbestimmung der Basisstationen ist unter anderem abhängig von der Größe der Triangulationskreise und der Häufigkeit der Datenbestimmung / Triangulation. Demnach sind die Ergebnisse der Triangulation mit weiter entfernten Basisstationen genauer, weil die systematische Ungenauigkeit der TA-Werte (550 Meter) relativ abnimmt und der lokale Einfluss von reflektierten Funksignalen geringer ist.

Die Ortungsbestimmung der GSM-Basisstationen mittels Triangulation erfolgt während der Zugfahrt vorzugsweise zyklisch. Es hat sich als vorteilhaft herausgestellt, die Triangulation in Abhängigkeit von veränderten TA-Werten zu wiederholen, beispielsweise im Intervall von 1000 Metern. Dadurch entstehen wesentlich weniger Daten im 2D-Almanach als im 1D-Almanach.

Im Ergebnis kann im Laufe der Fahrt ein 2D-Almanach in Form eines zweidimensionalen Streckenatlas entstehen, der die Koordinaten der empfangbaren GSM-Basisstationen beinhaltet.

Im Gegensatz zum 1D-Almanach kann der 2D-Almanach nicht nur weniger Datenumfang aufweisen, sondern ermöglicht auch eine zweidimensionale Ortung im Bereich der Bahnstrecke. Mittels 2D-Almanach können auch Ortungspunkte außerhalb der bereits befahrenen Bahnstrecke plausibilisiert werden, solange mindestens eine der erfassten Basisstationen noch erreichbar ist.

Zu Beginn der Verfahrensdurchführung kann der 2D-Almanach leer sein. Er kann mit jeder Fahrt schrittweise aufgebaut und mit Daten gefüllt werden. Bei wiederholten Fahrten über die gleiche Strecke kann der 2D-Almanach gepflegt werden, indem die Triangulation der empfangbaren Basisstationen permanent wiederholt wird. Neu ermittelte Standorte von Basisstationen, nachfolgend auch kurz BTS-Standorte genannt, können mit den bereits eingetragenen Standorten verglichen werden, um deren Vertrauenswürdigkeit zu prüfen.

Für die Daten der gespeicherten BTS-Standorte werden Attribute verwaltet, die deren Vertrauenswürdigkeit kennzeichnen. Bei übereinstimmend ermittelten Werten eines BTS-Standortes aus (zeitlich / örtlich) unterschiedlichen Triangulationen erhöht sich das Vertrauen in den ermittelten Standort. Bei Nichtübereinstimmung oder fehlenden Laufzeitmesswerten (z.B. TA-Werten) sinkt das Vertrauen. Werden gespeicherte BTS-Standorte mehrfach nicht bestätigt, werden diese aus dem Almanach vorzugsweise gelöscht.

Alternativ oder zusätzlich zum Aufbau des 2D-Streckenalmanach mittels Triangulation während der Zugfahrt kann dessen Erstellung auch offline erfolgen. Dazu werden die Projektierungsdaten der an der Bahnstrecke vorhandenen GSM-Infrastruktur bereits vor der Zugfahrt im 2D-Almanach erfasst. Die notwendigen Daten können aus öffentlichen BTS-Location Datenbanken übernommen werden (Informationen hierzu siehe http://cellidfinder.com/articles/how-to-find-cellid-locationwith-mcc-mnc-lac-i-cellid-cid) .

Der 1D-Betrieb umfasst vorzugsweise alle Aktivitäten zu Aufbau und Pflege eines 1D-Almanachs im Fahrzeug. Dazu gehören vorzugsweise folgende Aktivitäten:
- das laufende Scannen der GSM-Infrastruktur und die Gewinnung von TA-Werten und Kennungen der empfangbaren Basisstationen (durch das Mobilfunkgerät),
- die Aufnahme neuer Infrastruktur-Kennungen (TA-Werte, Cell-IDs) in den 1D-Almanach zusammen mit Ortungsreferenzen von GPS, TETRA R2 oder anderen Ortungssensoren,
- die laufende Plausibilisierung vorhandener Infrastruktur-Kennungen für Ortungsreferenzen im 1D-Almanach mit neu gescannten Infrastruktur-Kennungen (TA-Werte, Cell-IDs) und die Bewertung von deren Vertrauenswürdigkeit und/oder
- das Verwerfen nicht mehr vorhandener oder widersprüchlicher Infrastruktur-Kennungen für Ortungsreferenzen im 1D-Almanach.

Sofern keine aktuellen Ortungsdaten auf Basis GPS oder TETRA R2 für das Fahrzeug vorliegen, sondern nur Wegmessdaten von Sensoren, wie beispielsweise Wegimpulsgeber oder Radar verfügbar sind, sollte das Verwerfen von Infrastruktur-Kennungen vorzugsweise nicht durchgeführt werden (degraded mode).

Der 2D-Betrieb umfasst vorzugsweise alle Aktivitäten zu Aufbau und Pflege eines 2D-Almanachs im Fahrzeug. Dazu gehören vorzugsweise folgende Aktivitäten:
- das laufende Scannen der GSM-Infrastruktur und die Gewinnung von TA-Werten und Kennungen der empfangbaren Basisstationen (durch das Mobilfunkgerät),
- die laufende Durchführung der Triangulation erreichbarer GSM-Basisstationen aus den temporär abgelegten TA-Werten und Ortskoordinaten zum jeweiligen Empfangszeitpunkt und Aufnahme derer Standorte in den 2D-Almanach (z. B. mit WGS84 Koordinaten),
- die laufende Plausibilisierung vorhandener BTS-Standorte im 2D-Almanach mit den durch die fortlaufenden Triangulationen gelieferten BTS-Standorten und die Bewertung deren Vertrauenswürdigkeit und/oder
- das Verwerfen nicht mehr vorhandener oder widersprüchlicher BTS-Standorte im 2D-Almanach.

Der 2D-Betrieb wird vorzugsweise nur dann durchgeführt, wenn die TA-Daten von mindestens einer GSM-Basisstation verfügbar sind. Auch ist das Vorliegen aktueller Ortungsdaten auf Basis GPS oder TETRA R2 für das Fahrzeug für den 2D-Betrieb vorteilhaft.

Sind zeitweise nur Wegmessdaten von Sensoren, wie beispielsweise Wegimpulsgeber oder Radar verfügbar, kann anstelle des 2D-Betriebes der 1D-Betrieb als Rückfallebene durchgeführt werden.

Die Plausibilisierung einer herkömmlichen Fahrzeugortung, beispielsweise auf den Ortungsdaten von Balisen basierend, ist eine weitere Möglichkeit zur Verwendung des 1D- oder 2D-Almanachs. Dabei kann das aktuelle Ergebnis der Fahrzeugortung laufend mit dem aus dem 1D- oder 2D-Almanach abgeleiteten Fahrzeugstandort verglichen und unter Berücksichtigung der Verfahrenstoleranzen bewertet werden.

Sobald im 1D- oder 2D-Almanach eine vertrauenswürdige Datenbasis für die befahrene Strecke verfügbar ist und mindestens eine im Almanach verwaltete GSM-Basisstation funktechnisch erreichbar ist, können deren Daten jederzeit für eine Plausibilisierung alternativer Ortungsdaten verwendet werden.

Für die Plausibilisierung wird vorzugsweise der aktuell mittels Almanach ermittelte Fahrzeugort mit dem von einem alternativen Ortungssystem bestimmten Fahrzeugort verglichen. Je nach verwendetem Ortungssystem können die Daten dazu in ein gemeinsames Koordinatensystem konvertiert werden.

Im 1D-Almanach wird bei der Plausibilisierung vorzugsweise anhand des aktuellen Fahrzeugortes des alternativen Ortungssystems derjenige Streckenpunkt im Almanach selektiert, der den geringsten Abstand zum aktuellen Fahrzeugort hat. Die am selektierten Streckenpunkt gespeicherten TA-Werte der Basisstationen können daraufhin mit den aktuell empfangenen TA-Werten verglichen werden. Bei Übereinstimmung innerhalb der Toleranzgrenzen des Verfahrens ist der aktuelle Fahrzeugort durch eine unabhängige Prüfung plausibilisiert.

Im 2D-Almanach wird die Plausibilisierung vorzugsweise folgendermaßen durchgeführt: Aus dem aktuell ermittelten Fahrzeugort und dem im 2D-Almanach abgelegten Ort der empfangbaren Basisstation wird jeweils die Entfernung zwischen empfangbarer Basisstation und Zug berechnet und mit den TA-Werten der empfangenen Basisstationen verglichen. Ist die berechnete Entfernung innerhalb der Verfahrenstoleranz passend zu den empfangenen TA-Daten, ist der aktuelle Fahrzeugort unabhängig plausibilisiert.

Wenn die im Almanach für die Plausibilisierung verwendeten Daten durch verschiedene Zugfahrten bzw. unterschiedliche Basisstationen mehrfach bestätigt wurden und damit ein hohes Vertrauensniveau besitzen, werden die Daten eines alternativen Ortungssystems, wie beispielsweise Radar, bei erfolgreicher Plausibilisierung innerhalb der definierten Toleranzen qualitativ sehr hochwertig (signaltechnisch sicher). Dieses gilt auch hinsichtlich ihrer Fälschungssicherheit gegen böswillige Manipulation (Security).

Die Durchführung der Fahrzeugortung ist eine weitere Anwendungsmöglichkeit für den 1D- oder 2D-Almanach. Das 1D- oder 2D-Verfahren kann hierfür neben dem Aufbau und der Pflege des Almanachs den aktuellen Fahrzeugort liefern, der von den Anwendungen im Fahrzeug, wie beispielsweise der Zugsicherung oder der Fahrzeugdiagnose direkt verwendet werden kann. Bei Bedarf erfolgt eine Umrechnung der Orts-Koordinaten in ein applikationsgeeignetes Format.

Voraussetzung für die Bereitstellung sicherer Ortungsdaten ist das Vorhandensein einer ausreichenden und vertrauenswürdigen Datenbasis im Almanach. Insofern die Datenbasis nicht offline erstellt wurde, sind hierfür mehrere Fahrten über eine Strecke zum Aufbau des Almanachs erforderlich, bevor die Ortungsdaten für sichere Anwendungen ausreichend vertrauenswürdig sind.

Da die Durchführung des 1D- und 2D-Betriebs vorzugsweise bereits auf zwei unabhängigen Messverfahren beruht (z. B. GSM und GPS / TETRA oder alternativen Sensoren) und die Referenzdaten im Almanach durch mehrfache Fahrten fortlaufend ermittelt und wiederholt bestätigt werden können, bietet das Gesamtverfahren auch ohne zusätzliche Ortungssensoren bereits eine hohe Sicherheit im Sinne von fachsprachlich "Safety" und "Security".

Zusätzlich oder alternativ kann per GSM Daten-Broadcast (BCCH) die Verteilung der GPS-Koordinaten der jeweiligen Basisstation erfolgen (beispielsweise bei 02-Germany realisiert). In diesem Fall würde sich auch die Ortungstoleranz des Verfahrens auf die durch GPS, TETRA R2 oder die alternativen Ortungssensoren bedingten spezifischen Toleranzen verringern. Für eine Verteilung der Daten per BCCH ist allerdings die Mitwirkung des GSM Providers und die entsprechende Konfiguration des Netzverhaltens erforderlich.

Wird anstelle von GPS TETRA R2 für die Ortsbestimmung des Fahrzeugs verwendet, kann die Ortungstoleranz des Verfahrens ebenfalls verbessert werden.

Kombinationen von 1D-Betrieb und 2D-Betrieb sind möglich. Besonders auf Bahnstrecken, die Tunnelabschnitte aufweisen, ist es vorteilhaft, zeitweise auf den 1D-Betrieb als Rückfallebene auszuweichen, wenn beispielsweise kein Funkempfang möglich ist. In diesem Fall ist mindestens ein weiterer Ortungssensor, wie beispielsweise Radar, erforderlich, um laufend Ortungsdaten für das 1D-Verfahren zu liefern.

Erfindungsgemäß wird das funkbasierte Ortungssignal anhand der Laufzeitmesswerte und anhand des Ortungssignals eines schienenfahrzeugseitig installierten Ortungssensors fortlaufend erzeugt und das funkbasierte Ortungssignal erstens anhand eines schienenfahrzeugseitig vorliegenden Streckendatensatzes oder Landkartendatensatzes überprüft, wodurch einerseits die Authentizität der empfangenen Funksignale und andererseits die Korrektheit des Ortungssignals des schienenfahrzeugseitig installierten Ortungssensors nachgewiesen wird. Erfindungsgemäß wird das funkbasierte Ortungssignal zweitens bei der ersten Fahrt zum Aufbau oder bei wiederholten Fahrten dadurch, dass Laufzeitmesswerte an jeweiligen Ortungspunkten mit den bereits eingetragenen Laufzeitmessewerten verglichen werden, zur Aktualisierung des schienenfahrzeugseitig vorliegenden Streckendatensatzes oder Landkartendatensatzes verwendet. Erfindungsgemäß wird das funkbasierte Ortungssignal drittens für sicherungstechnische Anwendungen im Fahrzeug bereitgestellt.

Das funkbasierte Ortungssignal wird vorzugsweise mit den an einem Fahrzeugort gemessenen Laufzeitmesswerten, den Kennungen der korrespondierenden Basisstationen, dem von der anderen Ortungseinrichtung gelieferten Ortungssignal und einem Datensatzeintrag eines Streckendatensatzes oder Landkartendatensatzes gebildet.

Auch wird es als vorteilhaft angesehen, wenn das funkbasierte Ortungssignal einer Plausibilitätsprüfung unterzogen wird, bei der geprüft wird, ob die im Datensatzeintrag enthaltenen Laufzeiten der empfangenen Funksignale und der korrespondierenden Basisstationen an dem jeweiligen Fahrzeugort mit der in dem Streckenkartendatensatz zum jeweiligen Fahrzeugort abgespeicherten Dauer an Laufzeiten und Basisstationen übereinstimmt und im Falle einer Abweichung über ein vorgegebenen Maß hinaus ein Fehlersignal erzeugt wird.

Bei einer weiteren als vorteilhaft angesehenen Variante des Verfahrens ist vorgesehen, dass das funkbasierte Ortungssignal erzeugt wird, indem die Laufzeitmesswerte an mindestens drei unterschiedlichen Fahrzeugorten einem Triangulationsverfahren unterzogen werden, mit dem für jede empfangbare Basisstation deren Relativposition zum Fahrzeug ermittelt wird, woraus unter Heranziehung des von einem schienenfahrzeugseitig installierten Ortungssensor gelieferten Fahrzeugortes die Orte der Basisstationen ermittelt werden, die jeweils einen Datensatzeintrag bilden.

Das funkbasierte Ortungssignal wird vorzugsweise einer Plausibilitätsprüfung unterzogen, bei der geprüft wird, ob die ermittelten Standorte der Basisstationen mit den gemäß dem Landkartendatensatz zu erwartenden Standorten übereinstimmen und im Falle einer Ortsabweichung über ein vorgegebenes Maß hinaus ein Fehlersignal erzeugt wird.

Aus den plausibilisierten Standorten der Basisstationen und deren über Triangulation ermittelten Relativpositionen zum Fahrzeug wird der Fahrzeugort vorzugsweise durch Triangulation ermittelt, der mit dem von einem schienenfahrzeugseitig installierten Ortungssensor gelieferten Fahrzeugort verglichen wird, und im Falle einer Abweichung über ein vorgegebenen Maß hinaus ein Fehlersignal erzeugt wird.

Bei einer weiteren als vorteilhaft angesehenen Variante des Verfahrens ist vorgesehen, dass mit einer ersten Ortungseinrichtung anhand der Laufzeitmesswerte das funkbasierte Ortungssignal erzeugt wird, mit einer zweiten Ortungseinrichtung ein zweites Ortungssignal erzeugt wird und unter Heranziehung des funkbasierten Ortungssignals und des zweiten Ortungssignals ein überprüftes Ortungssignal gebildet wird.

Vorteilhaft ist es, wenn das zweite Ortungssignal das überprüfte Ortungssignal bildet, wenn das funkbasierte Ortungssignal die Plausibilität des zweiten Ortungssignals bestätigt, insbesondere nicht über ein vorgegebenes Maß hinaus von diesem abweicht, und ein Fehlersignal erzeugt wird, wenn das funkbasierte Ortungssignal die Plausibilität des zweiten Ortungssignals nicht bestätigt, insbesondere über ein vorgegebenes Maß hinaus von diesem abweicht.

Bei einer weiteren als vorteilhaft angesehenen Variante des Verfahrens ist vorgesehen, dass ein Datensatz einen Streckendatensatz umfasst oder ein Streckendatensatz ist, in dem über der Wegstrecke oder dem Ort des Schienenfahrzeugs die zu erwartenden Laufzeitmesswerte und die jeweiligen zu erwartenden Kennungen der Basisstationen abgespeichert sind, bei jeder Fahrt des Schienenfahrzeugs verifiziert und/oder bezüglich seiner Datensatzeinträge aktualisiert wird, indem aktualisierte Datensatzeinträge abgespeichert werden, die zuvor abgespeicherte Datensatzeinträge ersetzen, und bei zukünftigen Fahrten der verifizierte und/oder aktualisierte Datensatz zur Bildung des funkbasierten Ortungssignals herangezogen wird.

Bei einer weiteren als vorteilhaft angesehenen Variante des Verfahrens ist vorgesehen, dass der Datensatz einen Landkartendatensatz umfasst oder ein Landkartendatensatz ist, in dem die örtliche Lage der Basisstationen eingetragen ist, bei jeder Fahrt des Schienenfahrzeugs verifiziert und/oder aktualisiert wird, indem aktualisierte Datensatzeinträge abgespeichert werden, die zuvor abgespeicherte Datensatzeinträge ersetzen, und bei zukünftigen Fahrten der verifizierte und/oder aktualisierte abgespeicherte Landkartendatensatz zur Bildung des funkbasierten Ortungssignals herangezogen wird.

Die zweite Ortungseinrichtung ist vorzugsweise eine satellitenbasierte Ortungseinrichtung.

Bei einer weiteren als vorteilhaft angesehenen Variante des Verfahrens ist vorgesehen, dass in dem fahrzeugseitig abgespeicherten Streckenkartendatensatz oder Landkartendatensatz zusätzliche Merkmale verwaltet werden, die das Vertrauen in die Korrektheit der abgespeicherten ortsbezogenen Daten angeben und die durch die Ergebnisse der Ortsbestimmung bei wiederholten Fahrten über eine Strecke beeinflusst werden.

Der fahrzeugseitig erstellte Streckendatensatz oder Landkartendatensatz wird vorzugsweise über online- oder offline-Verteilungsmechanismen auf weitere Schienenfahrzeuge verteilt, wodurch diese Fahrzeuge auf Basis der bereits abgespeicherten Ortsdaten sofort zuverlässige Ortungsdaten generieren können.

Bei einer weiteren als vorteilhaft angesehenen Variante des Verfahrens ist vorgesehen, dass Fahrzeuge, die mit einem Landkartendatensatz ausgerüstet sind, auch auf Strecken, die nicht im Rahmen der Erzeugung des Landkartendatensatzes befahren wurden, sofort zuverlässige Ortungsdaten generieren können, sofern die funktechnische Erreichbarkeit einiger Basisstationen im Landkartendatensatz gegeben ist.

Bei einer weiteren als vorteilhaft angesehenen Variante des Verfahrens ist vorgesehen, dass die für das Verfahren erforderliche Versorgung mit Laufzeitinformationen aus der Mobilfunkinfrastruktur ohne Änderung oder Erweiterung der vorhandenen Mobilfunkgeräte und Schnittstellen erfolgen kann.

Im Übrigen wird es als vorteilhaft angesehen, wenn das funkbasierte Ortungssignal erzeugt wird, indem die gemessenen Laufzeitmesswerte und die Kennungen der korrespondierenden Basisstationen mit einem abgespeicherten Datensatz abgeglichen werden, in dem über der Wegstrecke oder dem jeweiligen Ort des Schienenfahrzeugs die zu erwartenden Laufzeitmesswerte und die jeweiligen zu erwartenden Kennungen der Basisstationen eingetragen sind.

Vorteilhaft ist es, wenn eine Plausibilitätsprüfung durchgeführt, insbesondere das funkbasierte Ortungssignal einer Plausibilitätsprüfung unterzogen wird, bei der geprüft wird, ob die Sequenz der gemessenen Laufzeiten der empfangenen Funksignale und der korrespondierenden Basisstationen mit der in dem Datensatz abgespeicherten Sequenz an Laufzeiten und Kennungen der Basisstationen übereinstimmt und im Falle einer Sequenzabweichung über ein vorgegebenen Maß hinaus ein Fehlersignal erzeugt wird.

Die Sequenzprüfung umfasst vorzugsweise die jeweils aktuelle sowie mindestens zwei, vorzugsweise zwischen 2 und 10, jeweils zeitlich zuvor liegende Laufzeiten oder Basisstationen.

Das funkbasierte Ortungssignal wird vorzugsweise erzeugt, indem die Laufzeitmesswerte einem Triangulationsverfahren unter Heranziehung eines abgespeicherten Landkartendatensatzes unterzogen werden, in dem die örtliche Lage der Basisstationen eingetragen ist.

Im Übrigen ist es von Vorteil, wenn eine Plausibilitätsprüfung durchgeführt, insbesondere das funkbasierte Ortungssignal einer Plausibilitätsprüfung unterzogen wird, bei der geprüft wird, ob - basisstationsindividuell - die Sequenz der gemessenen Laufzeiten der Funksignale mit der Sequenz der gemäß dem Landkartendatensatz zu erwartenden Laufzeiten übereinstimmt und im Falle einer Sequenzabweichung über ein vorgegebenen Maß hinaus ein Fehlersignal erzeugt wird.

Auch die letztgenannte Sequenzprüfung umfasst vorzugsweise die jeweils aktuelle sowie mindestens zwei, vorzugsweise zwischen 2 und 10, jeweils zeitlich zuvor liegende Laufzeiten. Darüber hinaus ist es vorteilhaft, wenn unter Heranziehung der Laufzeitmesswerte geprüft wird, ob die laufzeitmäßig möglichen Positionen der Basisstationen mit den in einem Landkartendatensatz eingetragenen Positionen der jeweiligen Basisstationen übereinstimmen und im Falle einer Abweichung über ein vorgegebenes Maß hinaus ein Fehlersignal erzeugt wird.

Die Erfindung bezieht sich außerdem auf ein Schienenfahrzeug mit einer Ortungseinrichtung zum Erzeugen zumindest eines den Ort eines Schienenfahrzeugs angebenden Ortungssignals gemäß Patentanspruch 23.

Die Erfindung wird nachfolgend anhand von Ausführungsbeispielen näher erläutert; dabei zeigen beispielhaft
- Figur 1: eine Schienenstrecke, die von einem Ausführungsbeispiel für ein erfindungsgemäßes Schienenfahrzeug befahren wird, und
- Figur 2: ein Ausführungsbeispiel für schienenfahrzeugseitige Komponenten, die zur Ortung des Schienenfahrzeugs gemäß Figur 1 eingesetzt werden können.

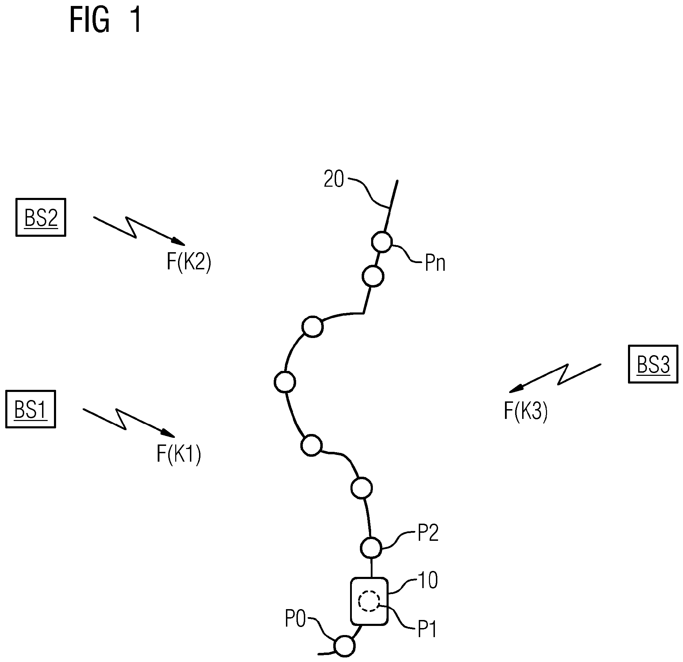

Die Figur 1 zeigt in einer vereinfachten Darstellung ein Schienenfahrzeug 10, das eine Schienenstrecke 20 befährt und dabei die Streckenpunkte P0, P1, P2,...,Pn passiert.

Das Schienenfahrzeug 10 ist mit einer Mobilfunkeinrichtung ausgestattet, die während der Fahrt des Schienenfahrzeugs von Basisstationen BS1, BS2 und BS3 eines Mobilfunknetzes Funksignale empfängt. Die Funksignale tragen die Kennungen K1, K2 und K3 der Basisstationen BS1, BS2 und BS3 und sind mit den Bezugszeichen F(K1), F(K2) und F(K3) gekennzeichnet.

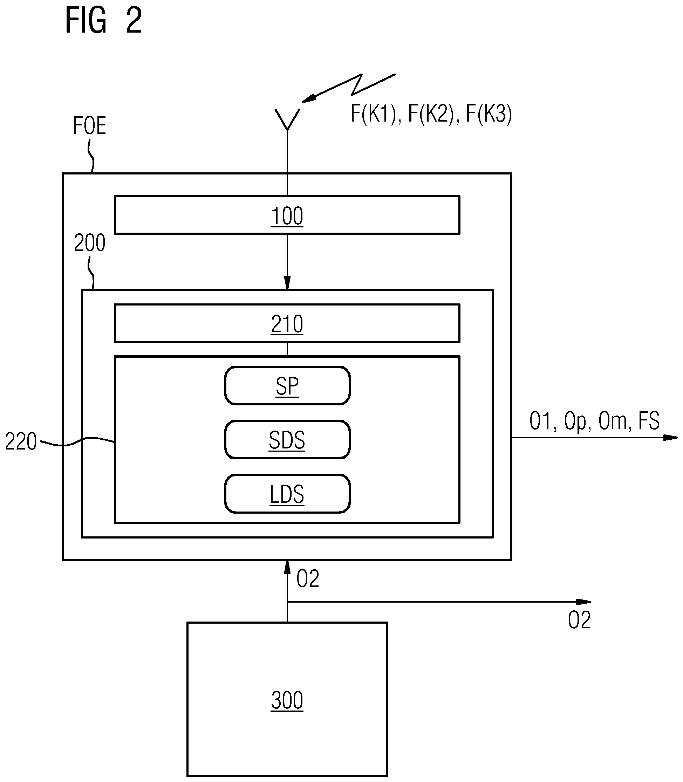

Die Figur 2 zeigt schienenfahrzeugseitige Komponenten zur Ortung des Schienenfahrzeugs 10 gemäß Figur 1 näher im Detail. Man erkennt die bereits erwähnte Mobilfunkeinrichtung 100 und eine Auswerteinrichtung 200, die gemeinsam eine funkbasierte Ortungseinrichtung FOE bilden, sowie eine weitere Ortungseinrichtung 300. Bei der weiteren Ortungseinrichtung 300 kann es sich beispielsweise um eine satellitengestützte Ortungseinrichtung oder einen Wegstreckenzähler (z. B. Kilometerzähler) handeln.

Die Auswerteinrichtung 200 weist eine Recheneinrichtung 210 und einen Speicher 220 auf. In dem Speicher 220 ist ein Softwareprogramm SP abgespeichert, das bei Ausführung durch die Recheneinrichtung 210 die Auswerteinrichtung 200 beispielsweise wie folgt arbeiten lassen kann:

### 1. Aufbau eines Streckendatensatzes SDS (eindimensionaler Almanach) :

Bei einer ersten Fahrt können die Laufzeiten der Funksignale F(K1), F(K2) und F(K3) über dem jeweiligen Ort, beispielsweise für die Streckenpunkte P0, P1, P2,...,Pn in Figur 1, aufgezeichnet und in dem Streckendatensatz SDS abgespeichert werden. Die Erfassung der Streckenpunkte P0, P1, P2,...,Pn kann beispielsweise mittels der weiteren Ortungseinrichtung 300 erfolgen.

Bei nachfolgenden Fahrten können die Angaben im Streckendatensatz SDS überprüft und ggf. korrigiert werden, so dass nach und nach ein besonders vertrauenswürdiger Streckendatensatz SDS entsteht.

### 2. Nutzung des Streckendatensatzes SDS zur Ortung:

Die Laufzeiten der Funksignale F(K1), F(K2) und F(K3) können zur Ortung des Schienenfahrzeugs herangezogen werden. Werden beispielsweise bei der Fahrt über der Schienenstrecke 20 die Laufzeiten der Funksignale F(K1), F(K2) und F(K3) überwacht und mit den Angaben in dem Streckendatensatz SDS verglichen, so kann derjenige Ort auf der Schienenstrecke 20 bestimmt werden, bei dem die Angaben in dem Streckendatensatz SDS mit den aktuellen Messwerten am besten übereinstimmen. In dieser Weise kann auf den jeweiligen Ort des Schienenfahrzeugs unter Bildung eines funkbasierten Ortungssignals O1 geschlossen werden.

Das funkbasierte Ortungssignals O1 kann beispielsweise mit dem Ortungssignal 02 der weiteren Ortungseinrichtung 300 zur Plausibilisierung unter Bildung eines plausibilisierten Ortungssignal Op verglichen werden und/oder mit diesem unter Bildung eines gemittelten Ortungssignals Om gemittelt werden.

### 3. Nutzung des Streckendatensatzes SDS zur Plausibiltätsprüfung:

Es kann eine Plausibilitätsprüfung durchgeführt werden, bei der geprüft wird, ob die Sequenz der gemessenen Laufzeiten der empfangenen Funksignale F(K1), F(K2) und F(K3) und der Kennungen K1, K2, K3 der korrespondierenden Basisstationen mit der in dem Streckendatensatz SDS abgespeicherten Sequenz an Laufzeiten und Basisstationen übereinstimmt und im Falle einer Sequenzabweichung über ein vorgegebenen Maß hinaus ein Fehlersignal FS erzeugt wird.

Die Sequenzprüfung umfasst vorzugsweise die jeweils aktuelle sowie mindestens zwei, vorzugsweise zwischen 2 und 10, jeweils zeitlich zuvor liegende Laufzeiten oder Basisstationen.

### 4. Aufbau eines Landkartendatensatz LDS (zweidimensionaler Almanach):

Bei einer ersten Fahrt können die Laufzeiten der Funksignale F(K1), F(K2) und F(K3) über dem jeweiligen Ort, beispielsweise für die Streckenpunkte P0, P1, P2,...,Pn in Figur 1, aufgezeichnet werden. Mittels Triangulation wird die räumliche Lage der Basisstationen BS1, BS2 und BS3 ermittelt. Die Positionen der Basisstationen werden in dem Landkartendatensatz LDS abgespeichert.

Bei nachfolgenden Fahrten können die Angaben im Landkartendatensatz LDS überprüft und ggf. korrigiert werden, so dass nach und nach ein besonders vertrauenswürdiger Landkartendatensatz LDS entsteht.

### 5. Nutzung des Landkartendatensatzes LDS zur Überprüfung der Basisstationen:

Die Laufzeiten der Funksignale F(K1), F(K2) und F(K3) können während der Fahrt des Schienenfahrzeugs herangezogen werden, um mittels Triangulation die Positionen der Basisstationen neu zu messen. Die aktuell gemessenen Positionen können mit den Positionen in dem Landkartendatensatz LDS verglichen werden. Weichen gemessene Positionen von abgespeicherten Positionen über ein vorgegebenes Maß hinaus ab, kann ein Fehlersignal FS erzeugt werden. In dieser Weise kann erkannt werden, wenn - beispielsweise im Rahmen eines terroristischen Anschlags zum Hervorrufen eines Unfalls - eine fremde Basisstation vortäuscht, eine autorisierte Basisstation zu sein und falsche Angaben an das Schienenfahrzeug 10 übermittelt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, der durch die folgenden Ansprüche definiert wird.

## Patentansprüche

1. Verfahren zum Erzeugen zumindest eines den Ort eines Schienenfahrzeugs (10) angebenden Ortungssignals,
wobei
- Laufzeitmesswerte, die die Laufzeit von Funksignalen (F(K1), F(K2), F(K3)) zwischen einer oder mehreren Basisstationen (BS1, BS2, BS3) eines oder mehrerer zellularer Mobilfunknetze einerseits und einer Mobilfunkeinrichtung (100) des Schienenfahrzeugs (10) andererseits angeben, schienenfahrzeugseitig erfasst werden und
- anhand der Laufzeitmesswerte ein funkbasiertes Ortungssignal (O1) erzeugt wird, ein Ortungssignal (02) einer anderen Ortungseinrichtung (300) überprüft wird und/oder die Authentizität der die Funksignale (F(K1), F(K2), F(K3)) sendenden Basisstation (BS1, BS2, BS3) oder Basisstationen (BS1, BS2, BS3) überprüft wird,
**dadurch gekennzeichnet, dass**
- das funkbasierte Ortungssignal (O1) anhand der Laufzeitmesswerte und anhand des Ortungssignals (02) eines schienenfahrzeugseitig installierten Ortungssensors (300) fortlaufend erzeugt wird,
- das funkbasierte Ortungssignal (O1) erstens anhand eines schienenfahrzeugseitig vorliegenden Streckendatensatzes (SDS) oder Landkartendatensatzes (LDS) überprüft wird, wodurch einerseits die Authentizität der empfangenen Funksignale (F(K1), F(K2), F(K3)) und andererseits die Korrektheit des Ortungssignals (02) des schienenfahrzeugseitig installierten Ortungssensors (300) nachgewiesen wird,
- das funkbasierte Ortungssignal (O1) zweitens
∘ bei der ersten Fahrt zum Aufbau oder
∘ bei wiederholten Fahrten dadurch, dass Laufzeitmesswerte an jeweiligen Ortungspunkten mit den bereits eingetragenen Laufzeitmesswerten verglichen werden, zur Aktualisierung
des schienenfahrzeugseitig vorliegenden Streckendatensatzes (SDS) oder Landkartendatensatzes (LDS) verwendet wird, und
- das funkbasierte Ortungssignal (O1) drittens für sicherungstechnische Anwendungen im Fahrzeug bereitgestellt wird.

2. Verfahren nach einem der voranstehenden Ansprüche,
**dadurch gekennzeichnet, dass**
das funkbasierte Ortungssignal (O1) mit den an einem Fahrzeugort (P0, P1, P2, Pn) gemessenen Laufzeitmesswerten, den Kennungen (K1, K2, K3) der korrespondierenden Basisstationen (BS1, BS2, BS3), dem von der anderen Ortungseinrichtung (300) gelieferten Ortungssignal (02) und einem Datensatzeintrag eines Streckendatensatzes (SDS) oder Landkartendatensatzes (LDS) gebildet wird.

3. Verfahren nach einem der voranstehenden Ansprüche,
**dadurch gekennzeichnet, dass**
das funkbasierte Ortungssignal (O1) einer Plausibilitätsprüfung unterzogen wird, bei der geprüft wird, ob die im Datensatzeintrag enthaltenen Laufzeiten der empfangenen Funksignale (F(K1), F(K2), F(K3)) und der korrespondierenden Basisstationen (BS1, BS2, BS3) an dem jeweiligen Fahrzeugort mit der in dem Streckendatensatz (SDS) zum jeweiligen Fahrzeugort abgespeicherten Dauer an Laufzeiten und Basisstationen (BS1, BS2, BS3) übereinstimmt und im Falle einer Abweichung über ein vorgegebenen Maß hinaus ein Fehlersignal (FS) erzeugt wird.

4. Verfahren nach einem der voranstehenden Ansprüche,
**dadurch gekennzeichnet, dass**
das funkbasierte Ortungssignal (O1) erzeugt wird, indem die Laufzeitmesswerte an mindestens drei unterschiedlichen Fahrzeugorten einem Triangulationsverfahren unterzogen werden, mit dem für jede empfangbare Basisstation (BS1,BS2, BS3) deren Relativposition zum Fahrzeug ermittelt wird, woraus unter Heranziehung des von einem schienenfahrzeugseitig installierten Ortungssensor gelieferten Fahrzeugortes die Orte der Basisstationen (BS1, BS2, BS3) ermittelt werden, die jeweils einen Datensatzeintrag bilden.

5. Verfahren nach Anspruch 4,
**dadurch gekennzeichnet, dass**
das funkbasierte Ortungssignal (O1) einer Plausibilitätsprüfung unterzogen wird, bei der geprüft wird, ob die ermittelten Standorte der Basisstationen (BS1, BS2, BS3) mit den gemäß dem Landkartendatensatz (LDS) zu erwartenden Standorten übereinstimmen und im Falle einer Ortsabweichung über ein vorgegebenen Maß hinaus ein Fehlersignal (FS) erzeugt wird.

6. Verfahren nach Anspruch 5,
**dadurch gekennzeichnet, dass**
aus den plausibilisierten Standorten der Basisstationen (BS1, BS2, BS3) und deren über Triangulation ermittelten Relativpositionen zum Fahrzeug der Fahrzeugort durch Triangulation ermittelt wird, mit dem von einem schienenfahrzeugseitig installierten Ortungssensor gelieferten Fahrzeugort verglichen wird, und im Falle einer Abweichung über ein vorgegebenen Maß hinaus ein Fehlersignal (FS) erzeugt wird.

7. Verfahren nach einem der voranstehenden Ansprüche,
**dadurch gekennzeichnet, dass**
- mit einer ersten Ortungseinrichtung anhand der Laufzeitmesswerte das funkbasierte Ortungssignal (O1) erzeugt wird,
- mit einer zweiten Ortungseinrichtung (300) ein zweites Ortungssignal (02) erzeugt wird und
- unter Heranziehung des funkbasierten Ortungssignals (O1) und des zweiten Ortungssignals (02) ein überprüftes Ortungssignal (Op) gebildet wird.

8. Verfahren nach Anspruch 7,
**dadurch gekennzeichnet, dass**
- das zweite Ortungssignal (02) das überprüfte Ortungssignal (Op) bildet, wenn das funkbasierte Ortungssignal (O1) die Plausibilität des zweiten Ortungssignals (02) bestätigt, insbesondere nicht über ein vorgegebenes Maß hinaus von diesem abweicht, und
- ein Fehlersignal (FS) erzeugt wird, wenn das funkbasierte Ortungssignal (O1) die Plausibilität des zweiten Ortungssignals (02) nicht bestätigt, insbesondere über ein vorgegebenes Maß hinaus von diesem abweicht.

9. Verfahren nach einem der voranstehenden Ansprüche,
**dadurch gekennzeichnet, dass**
- ein Datensatz einen Streckendatensatz (SDS) umfasst oder ein Streckendatensatz (SDS) ist, in dem über der Wegstrecke oder dem Ort des Schienenfahrzeugs (10) die zu erwartenden Laufzeitmesswerte und die jeweiligen zu erwartenden Kennungen (K1, K2, K3) der Basisstationen (BS1, BS2, BS3) abgespeichert sind, bei jeder Fahrt des Schienenfahrzeugs (10) verifiziert und/oder bezüglich seiner Datensatzeinträge aktualisiert wird, indem aktualisierte Datensatzeinträge abgespeichert werden, die zuvor abgespeicherte Datensatzeinträge ersetzen, und
- bei zukünftigen Fahrten der verifizierte und/oder aktualisierte Datensatz zur Bildung des funkbasierten Ortungssignals (O1) herangezogen wird.

10. Verfahren nach einem der voranstehenden Ansprüche,
**dadurch gekennzeichnet, dass**
- der Datensatz einen Landkartendatensatz (LDS) umfasst oder ein Landkartendatensatz (LDS) ist, in dem die örtliche Lage der Basisstationen (BS1, BS2, BS3) eingetragen ist, bei jeder Fahrt des Schienenfahrzeugs (10) verifiziert und/oder aktualisiert wird, indem aktualisierte Datensatzeinträge abgespeichert werden, die zuvor abgespeicherte Datensatzeinträge ersetzen, und
- bei zukünftigen Fahrten der verifizierte und/oder aktualisierte abgespeicherte Landkartendatensatz (LDS) zur Bildung des funkbasierten Ortungssignals (O1) herangezogen wird.

11. Verfahren nach einem der voranstehenden Ansprüche,
**dadurch gekennzeichnet, dass** die zweite Ortungseinrichtung (300) eine satellitenbasierte Ortungseinrichtung ist.

12. Verfahren nach einem der voranstehenden Ansprüche,
**dadurch gekennzeichnet, dass**
in dem fahrzeugseitig abgespeicherten Streckendatensatz (SDS) oder Landkartendatensatz (LDS) zusätzliche Merkmale verwaltet werden, die das Vertrauen in die Korrektheit der abgespeicherten ortsbezogenen Daten angeben und die durch die Ergebnisse der Ortsbestimmung bei wiederholten Fahrten über eine Strecke beeinflusst werden.

13. Verfahren nach einem der voranstehenden Ansprüche,
**dadurch gekennzeichnet, dass**
der fahrzeugseitig erstellte Streckendatensatz (SDS) oder Landkartendatensatz (LDS) über online oder offline Verteilungsmechanismen auf weitere Schienenfahrzeuge verteilt wird, wodurch diese Fahrzeuge auf Basis der bereits abgespeicherten Ortsdaten sofort zuverlässige Ortungsdaten generieren können.

14. Verfahren nach einem der voranstehenden Ansprüche,
**dadurch gekennzeichnet, dass**
Fahrzeuge, die mit einem Landkartendatensatz (LDS) ausgerüstet sind, auch auf Strecken, die nicht im Rahmen der Erzeugung des Landkartendatensatzes (LDS) befahren wurden, sofort zuverlässige Ortungsdaten generieren können, sofern die funktechnische Erreichbarkeit einiger Basisstationen (BS1,BS2, BS3) im Landkartendatensatz (LDS) gegeben ist.

15. Verfahren nach einem der voranstehenden Ansprüche,
**dadurch gekennzeichnet, dass**
die für das Verfahren erforderliche Versorgung mit Laufzeitinformationen aus der Mobilfunkinfrastruktur ohne Änderung oder Erweiterung der vorhandenen Mobilfunkgeräte und Schnittstellen erfolgen kann.

16. Verfahren nach einem der voranstehenden Ansprüche,
**dadurch gekennzeichnet, dass**
das funkbasierte Ortungssignal (O1) erzeugt wird, indem die gemessenen Laufzeitmesswerte und die Kennungen (K1, K2, K3) der korrespondierenden Basisstationen (BS1, BS2, BS3) mit einem abgespeicherten Datensatz, insbesondere einem Streckendatensatz (SDS) oder einem Landkartendatensatzes (LDS), abgeglichen werden, in dem über der Wegstrecke (20) oder dem jeweiligen Ort (P0, P1, P2,...,Pn) des Schienenfahrzeugs (10) die zu erwartenden Laufzeitmesswerte und die jeweiligen zu erwartenden Kennungen (K1, K2, K3) der Basisstationen (BS1, BS2, BS3) eingetragen sind.

17. Verfahren nach Anspruch 16,
**dadurch gekennzeichnet, dass**
eine Plausibilitätsprüfung durchgeführt, insbesondere das funkbasierte Ortungssignal (O1) einer Plausibilitätsprüfung unterzogen wird, bei der geprüft wird, ob die Sequenz der gemessenen Laufzeiten der empfangenen Funksignale (F(K1), F(K2), F(K3)) und der korrespondierenden Kennungen (K1, K2, K3) der Basisstationen (BS1, BS2, BS3) mit der in dem Datensatz abgespeicherten Sequenz an Laufzeiten und Kennungen (K1, K2, K3) der Basisstationen (BS1, BS2, BS3) übereinstimmt und im Falle einer Sequenzabweichung über ein vorgegebenen Maß hinaus ein Fehlersignal (FS) erzeugt wird.

18. Verfahren nach Anspruch 17,
**dadurch gekennzeichnet, dass**
die Sequenzprüfung die jeweils aktuelle sowie mindestens zwei, vorzugsweise zwischen 2 und 10, jeweils zeitlich zuvor liegende Laufzeiten oder Basisstationen (BS1, BS2, BS3) umfasst.

19. Verfahren nach einem der voranstehenden Ansprüche,
**dadurch gekennzeichnet, dass**
das funkbasierte Ortungssignal (O1) erzeugt wird, indem die Laufzeitmesswerte einem Triangulationsverfahren unter Heranziehung eines abgespeicherten Landkartendatensatzes (LDS) unterzogen werden, in dem die örtliche Lage der Basisstationen (BS1, BS2, BS3) eingetragen ist.

20. Verfahren nach Anspruch 19,
**dadurch gekennzeichnet, dass**
eine Plausibilitätsprüfung durchgeführt, insbesondere das funkbasierte Ortungssignal (O1) einer Plausibilitätsprüfung unterzogen wird, bei der geprüft wird, ob - basisstationsindividuell - die Sequenz der gemessenen Laufzeiten der Funksignale (F(K1), F(K2), F(K3)) mit den gemäß dem Landkartendatensatz (LDS) zu erwartenden Laufzeiten übereinstimmen und im Falle einer Sequenzabweichung über ein vorgegebenen Maß hinaus ein Fehlersignal (FS) erzeugt wird.

21. Verfahren nach Anspruch 20,
**dadurch gekennzeichnet, dass**
die Sequenzprüfung die jeweils aktuelle sowie mindestens zwei, vorzugsweise zwischen 2 und 10, jeweils zeitlich zuvor liegende Laufzeiten umfasst.

22. Verfahren nach einem der voranstehenden Ansprüche,
**dadurch gekennzeichnet, dass**
unter Heranziehung der Laufzeitmesswerte geprüft wird, ob die laufzeitmäßig möglichen Positionen der Basisstationen (BS1, BS2, BS3) mit den in einem Landkartendatensatz (LDS) eingetragenen Positionen der jeweiligen Basisstationen (BS1, BS2, BS3) übereinstimmen und im Falle einer Abweichung über ein vorgegebenes Maß hinaus ein Fehlersignal (FS) erzeugt wird.

23. Schienenfahrzeug (10) mit einer Ortungseinrichtung zum Erzeugen zumindest eines den Ort eines Schienenfahrzeugs (10) angebenden Ortungssignals,
wobei
- das Schienenfahrzeug (10) eine Auswerteinrichtung (200) aufweist, die Laufzeitmesswerte, die die Laufzeit von Funksignalen (F(K1), F(K2), F(K3)) zwischen einer oder mehreren Basisstationen (BS1, BS2, BS3) eines oder mehrerer zellularer Mobilfunknetze einerseits und einer Mobilfunkeinrichtung (100) des Schienenfahrzeugs (10) andererseits angeben, schienenfahrzeugseitig erfasst, und
- die Auswerteinrichtung (200) dazu ausgebildet ist, anhand der Laufzeitmesswerte ein funkbasiertes Ortungssignal (O1) zu erzeugen, ein Ortungssignal (02) einer anderen Ortungseinrichtung (300) zu überprüfen und/oder die Authentizität der die Funksignale (F(K1), F(K2), F(K3)) sendenden Basisstation (BS1, BS2, BS3) oder Basisstationen (BS1, BS2, BS3) zu überprüfen,
**dadurch gekennzeichnet, dass**
die Auswerteeinrichtung dazu eingerichtet ist,
- das funkbasierte Ortungssignal (O1) anhand der Laufzeitmesswerte und anhand des Ortungssignals (02) eines schienenfahrzeugseitig installierten Ortungssensors (300) fortlaufend zu erzeugen,
- das funkbasierte Ortungssignal (O1) erstens anhand eines schienenfahrzeugseitig vorliegenden Streckendatensatzes (SDS) oder Landkartendatensatzes (LDS) zu überprüfen, wodurch einerseits die Authentizität der empfangenen Funksignale (F(K1), F(K2), F(K3)) und andererseits die Korrektheit des Ortungssignals (02) des schienenfahrzeugseitig installierten Ortungssensors (300) nachgewiesen wird,
- das funkbasierte Ortungssignal (O1) zweitens
∘ bei der ersten Fahrt zum Aufbau oder
∘ bei wiederholten Fahrten dadurch, dass Laufzeitmesswerte an jeweiligen Ortungspunkten mit den bereits eingetragenen Laufzeitmesswerten verglichen werden, zur Aktualisierung
des schienenfahrzeugseitig vorliegenden Streckendatensatzes (SDS) oder Landkartendatensatzes (LDS) zu verwenden, und
- das funkbasierte Ortungssignal (O1) drittens für sicherungstechnische Anwendungen im Fahrzeug bereitzustellen.

## Claims

1. Method for generating at least one locating signal which indicates the location of a rail vehicle (10),
wherein
- propagation time measurement values, which indicate the propagation time of radio signals (F(K1), F(K2), F(K3)) between one or more base stations (BS1, BS2, BS3) of one or more cellular mobile radio networks on the one hand and a mobile radio facility (100) of the rail vehicle (10) on the other, are recorded on the rail side and
- on the basis of the propagation time measurement values, a radio-based locating signal (01) is generated, a locating signal (O2) of another locating facility (300) is reviewed and/or the authenticity of the base station (BS1, BS2, BS3) or base stations (BS1, BS2, BS3) sending the radio signals (F(K1), F(K2), F(K3)) is reviewed,
**characterised in that**
- the radio-based locating signal (01) is generated continuously on the basis of the propagation time measurement values and on the basis of the locating signal (O2) of a locating sensor (300) installed on the rail vehicle side,
- the radio-based locating signal (01) is firstly reviewed on the basis of a route data set (SDS) or map data set (LDS) available on the rail vehicle side, whereby on the one hand the authenticity of the received radio signals (F(K1), F(K2), F(K3)) and on the other hand the correctness of the locating signal (O2) of the locating sensor (300) installed on the rail vehicle side are established,
- the radio-based locating signal (01) is secondly
∘ used on the first journey to set up or
∘ used on repeat journeys, by comparing propagation time measurement values at respective locating points with the already entered propagation time measurement values, to update
the route data set (SDS) or map data set (LDS) available on the rail vehicle side, and
- the radio-based locating signal (01) is thirdly provided for safety-related applications in the vehicle.

2. Method according to one of the preceding claims,
**characterised in that**
the radio-based locating signal (01) is formed by the propagation time measurement values measured at a vehicle location (P0, P1, P2, Pn), the identifiers (K1, K2, K3) of the corresponding base stations (BS1, BS2, BS3), the locating signal (O2) delivered by the other locating facility (300) and a data set entry of a route data set (SDS) or map data set (LDS).

3. Method according to one of the preceding claims,
**characterised in that**
the radio-based locating signal (01) undergoes a plausibility check, in which it is checked whether the propagation times, contained in data set entry, of the received radio signals (F(K1), F(K2), F(K3)) and the corresponding base stations (BS1, BS2, BS3) at the respective vehicle location match the duration of propagation times and base stations (BS1, BS2, BS3) stored in the route data set (SDS) at the respective vehicle location, and a fault signal (FS) is generated in the event of a deviation beyond a predefined amount.

4. Method according to one of the preceding claims,
**characterised in that**
the radio-based locating signal (01) is generated by the propagation time measurement values undergoing a triangulation process at at least three different vehicle locations, with which for every receivable base station (BS1, BS2, BS3) the relative position thereof to the vehicle is ascertained, from which, using the vehicle location delivered by the locating sensor installed on the rail vehicle side, the locations of the base stations (BS1, BS2, BS3) are ascertained, which form a data set entry in each case.

5. Method according to claim 4,
**characterised in that**
the radio-based locating signal (01) undergoes a plausibility check, in which it is checked whether the ascertained locations of the base stations (BS1, BS2, BS3) match the locations to be anticipated according to the map data set (LDS), and a fault signal (FS) is generated in the event of a location deviation beyond a predefined amount.

6. Method according to claim 5,
**characterised in that**
the vehicle location is ascertained by triangulation from the plausibility-checked locations of the base stations (BS1, BS2, BS3) and their relative positions to the vehicle, which have been ascertained via triangulation, is compared with the vehicle location delivered by a locating sensor installed on the rail vehicle side, and a fault signal (FS) is generated in the event of a deviation beyond a predefined amount.

7. Method according to one of the preceding claims,
**characterised in that**
- a first locating facility is used to generate the radio-based locating signal (01) on the basis of the propagation time measurement values,
- a second locating facility (300) is used to generate a second locating signal (O2), and
- a reviewed locating signal (Op) is formed using the radio-based locating signal (01) and the second locating signal (O2) .

8. Method according to claim 7,
**characterised in that**
- the second locating signal (O2) forms the reviewed locating signal (Op) if the radio-based locating signal (01) confirms the plausibility of the second locating signal (O2), in particular does not deviate therefrom beyond a predefined amount, and
- a fault signal (FS) is generated if the radio-based locating signal (01) does not confirm the plausibility of the second locating signal (O2), in particular deviates therefrom beyond a predefined amount.

9. Method according to one of the preceding claims,
**characterised in that**
- a data set comprises a route data set (SDS) or is a route data set (SDS), in which over the distance or the location of the rail vehicle (10) the propagation time measurement values to be anticipated and the respective identifiers (K1, K2, K3) of the base stations (BS1, BS2, BS3) to be anticipated are stored, is verified and/or updated with regard to its data set entries on each journey of the rail vehicle (10), by updated data set entries being stored which replace previously stored data set entries, and
- on future journeys, the verified and/or updated data set is used to form the radio-based locating signal (01).

10. Method according to one of the preceding claims,
**characterised in that**
- the data set comprises a map data set (LDS) or is a map data set (LDS), in which the local position of the base station (BS1, BS2, BS3) is entered, is verified and/or updated on each journey of the rail vehicle (10), by updated data set entries being stored which replace previously stored data set entries, and
- on future journeys, the verified and/or updated stored map data set (LDS) is used to form the radio-based locating signal (01).

11. Method according to one of the preceding claims,
**characterised in that**
the second locating facility (300) is a satellite-based locating facility.

12. Method according to one of the preceding claims,
**characterised in that**
additional features, which indicate the trust in the correctness of the stored location-related data and which are influenced by the results of the location determination on repeat journeys over a route, are managed in the route data set (SDS) or map data set (LDS) stored on the vehicle side.

13. Method according to one of the preceding claims,
**characterised in that**
the route data set (SDS) or map data set (LDS) created on the vehicle side is distributed to further rail vehicles via online or offline distribution mechanisms, whereby said vehicles can immediately generate reliable location data on the basis of the already stored location data.

14. Method according to one of the preceding claims,
**characterised in that**
vehicles that are equipped with a map data set (LDS), even on routes that have not been travelled as part of the generation of the map data set (LDS), can immediately generate reliable location data, provided that some base stations (BS1, BS2, BS3) can be reached on a radio basis in the map data set (LDS).

15. Method according to one of the preceding claims,
**characterised in that**
the supply of propagation time information from the mobile radio infrastructure, which is necessary for the method, can take place without changing or expanding the available mobile radio devices and interfaces.

16. Method according to one of the preceding claims,
**characterised in that**
the radio-based locating signal (01) is generated by the measured propagation time measurement values and the identifiers (K1, K2, K3) of the corresponding base stations (BS1, BS2, BS3) being aligned with a stored data set, in particular a route data set (SDS) or a map data set (LDS), in which over the distance (20) or the respective location (P0, P1, P2,...,Pn) of the rail vehicle (10) the propagation time measurement values to be anticipated and the respective identifiers (K1, K2, K3) of the base stations (BS1, BS2, BS3) to be anticipated are entered.

17. Method according to claim 16,
**characterised in that**
a plausibility check is performed, in particular the radio-based locating signal (01) undergoes a plausibility check, in which it is checked whether the sequence of the measured propagation times of the received radio signals (F(K1), F(K2), F(K3)) and the corresponding identifiers (K1, K2, K3) of the base stations (BS1, BS2, BS3) match the sequence of propagation times and identifiers (K1, K2, K3) of the base stations (BS1, BS2, BS3) stored in the data set, and a fault signal (FS) is generated in the event of a sequence deviation beyond a predefined amount.

18. Method according to claim 17,
**characterised in that**
the sequence check comprises the current propagation time or base station (BS1, BS2, BS3) in each case, as well as at least two, preferably between 2 and 10, propagation times or base stations (BS1, BS2, BS3) which lie earlier in time in each case.

19. Method according to one of the preceding claims,
**characterised in that**
the radio-based locating signal (01) is generated by the propagation time measurement values undergoing a triangulation process using a stored map data set (LDS), by the local position of the base stations (BS1, BS2, BS3) being entered.

20. Method according to claim 19,
**characterised in that**
a plausibility check is performed, in particular the radio-based locating signal (01) undergoes a plausibility check, in which it is checked whether - individually for base stations - the sequence of the measured propagation times of the radio signals (F(K1), F(K2), F(K3)) matches the propagation times to be anticipated according to the map data set (LDS), and a fault signal (FS) is generated in the event of a sequence deviation beyond a predefined amount.

21. Method according to claim 20,
**characterised in that**
the sequence check comprises the current propagation time in each case, as well as at least two, preferably between 2 and 10, propagation times which lie earlier in time in each case.

22. Method according to one of the preceding claims,
**characterised in that**
using the propagation time measurement values, it is checked whether the positions of the base stations (BS1, BS2, BS3) that are possible in terms of propagation time match the positions of the respective base stations (BS1, BS2, BS3) that are entered in a map data set (LDS), and a fault signal (FS) is generated in the event of a deviation beyond a predefined amount.

23. Rail vehicle (10) with a locating facility for generating at least one locating signal which indicates the location of a rail vehicle (10),
wherein
- the rail vehicle (10) has an evaluation facility (200) which records, on the rail side, propagation time measurement values which indicate the propagation time of radio signals (F(K1), F(K2), F(K3)) between one or more base stations (BS1, BS2, BS3) of one or more cellular mobile radio networks on the one hand and a mobile radio facility (100) of the rail vehicle (10) on the other, and
- the evaluation facility (200) is embodied, on the basis of the propagation time measurement values, to generate a radio-based locating signal (01), to review a locating signal (O2) of another locating facility (300) and/or to review the authenticity of the base station (BS1, BS2, BS3) or base stations (BS1, BS2, BS3) sending the radio signals (F(K1), F(K2), F(K3)),
**characterised in that**
the evaluation facility is configured
- to generate the radio-based locating signal (01) continuously on the basis of the propagation time measurement values and on the basis of the locating signal (O2) of a locating sensor (300) installed on the rail vehicle side,
- firstly to review the radio-based locating signal (01) on the basis of a route data set (SDS) or map data set (LDS) available on the rail vehicle side, whereby on the one hand the authenticity of the received radio signals (F(K1), F(K2), F(K3)) and on the other hand the correctness of the locating signal (O2) of the locating sensor (300) installed on the rail vehicle side are established,
- secondly to use the radio-based locating signal (01)
∘ on the first journey to set up or
∘ on repeat journeys, by comparing propagation time measurement values at respective locating points with the already entered propagation time measurement values, to update
the route data set (SDS) or map data set (LDS) available on the rail vehicle side, and
- thirdly to provide the radio-based locating signal (01) for safety-related applications in the vehicle.

## Revendications

1. Procédé de production d'au moins un signal de localisation indiquant le lieu où se trouve un véhicule (10) ferroviaire,
dans lequel
- on détecte, du côté du véhicule ferroviaire, des valeurs de mesure du temps de parcours, qui indiquent le temps de parcours de signaux (F(K1), F(K2), F(K3)) radios entre un ou plusieurs postes (BS1, BS2, BS3) de base d'un réseau cellulaire de téléphonie mobile d'une part et un dispositif (100) radio mobile du véhicule (10) ferroviaire d'autre part, et
- à l'aide des valeurs de mesure du temps de parcours, on produit un signal (01) de localisation reposant la radioélectricité, on contrôle un signal (O2) de localisation d'un autre dispositif (300) de localisation et/ou on contrôle l'authenticité de la station (BS1, BS2, BS3) de base ou des stations (BS1, BS2, BS3) de base envoyant les signaux (F(K1), F(K2), F(K3)) radios,
**caractérisé en ce que**
- on produit en continu le signal (01) de localisation reposant sur la radioélectricité, à l'aide des valeurs de mesure de temps de parcours et à l'aide du signal (O2) de localisation d'un capteur (300) de localisation installé du côté du véhicule ferroviaire,
- on contrôle le signal (01) de localisation reposant la radioélectricité, premièrement à l'aide d'un ensemble (SDS) de données de voie présentes du côté du véhicule ferroviaire ou d'un ensemble (LDS) de données de carte du pays, grâce à quoi d'une part, on prouve que les signaux (F(K1), F(K2), F(K3)) radios reçus sont authentiques et, d'autre part que le signal (O2) de localisation du capteur (300) de localisation installé du côté du véhicule ferroviaire est correct,
- on utilise, deuxièmement, le signal (01) de localisation reposant sur la radioélectricité
∘ lors de la première circulation pour l'établissement ou
∘ lors de circulations répétées, en comparant des valeurs de mesure de temps de parcours aux points de localisation respectifs aux valeurs de mesure de temps de parcours déjà enregistrées, pour la mise à jour
de l'ensemble (SDS) de données de voie ou de l'ensemble (LDS) de données de carte du pays présent du côté du véhicule ferroviaire, et
- on met à disposition, dans le véhicule, le signal (01) de localisation reposant sur la radioélectricité, troisièmement pour des applications de la technique de sécurité.

2. Procédé suivant l'une des revendications précédentes,
**caractérisé en ce que**
l'on forme le signal (01) de localisation reposant sur la radioélectricité avec les valeurs de mesure de temps de parcours mesurées à un lieu (P0, P1, P2, Pn) où se trouve le véhicule ferroviaire, les caractéristiques (K1, K2, K3) des postes (BS1, BS2, BS3) de base correspondants, le signal (O2) de localisation fourni par l'autre dispositif (300) de localisation et un enregistrement d'un ensemble (SDS) de données de voie ou d'un ensemble (LDS) de données de carte du pays.

3. Procédé suivant l'une des revendications précédentes,
**caractérisé en ce que**
l'on soumet le signal (01) de localisation reposant sur la radioélectricité à un examen de vraisemblance, dans lequel on contrôle si les temps de parcours, contenus dans l'enregistrement de l'ensemble de données, des signaux (F(K1), F(K2), F(K3)) radios reçus et des postes (BS1, BS2, BS3) de base correspondants coïncident au lieu respectif où se trouve le véhicule avec la durée de temps de parcours, mise en mémoire pour le lieu respectif où se trouve le véhicule dans l'ensemble (SDS) de données et les postes (BS1, BS2, BS3) de base et, dans le cas d'un écart au-delà d'une mesure donnée à l'avance, on produit un signal (FS) d'erreur.

4. Procédé suivant l'une des revendications précédentes,
**caractérisé en ce que**
l'on produit le signal (01) reposant sur la radioélectricité en soumettant les valeurs de mesure de temps de parcours en au moins trois lieux différents où se trouve le véhicule à un procédé de triangulation, par lequel on détermine, pour chaque poste (BS1, BS2, BS3) de base, pouvant recevoir, sa position relative par rapport au véhicule, à partir de quoi on détermine, en tirant parti du lieu où se trouve le véhicule, fourni par le capteur de localisation installé du côté du véhicule ferroviaire, les lieux où se trouvent les postes (BS1, BS2, BS3) de base, qui forment respectivement un enregistrement d'ensemble de données.

5. Procédé suivant la revendication 4,
**caractérisé en ce que**
l'on soumet le signal (01) de localisation reposant sur la radioélectricité à un contrôle de vraisemblance, dans lequel on contrôle si les lieux déterminés où se trouvent les postes (BS1, BS2, BS3) de base coïncident avec les lieux escomptés suivant l'ensemble (LDS) de données de carte du pays et, dans le cas où il y a un écart de localisation, au-delà d'une mesure donnée à l'avance, on produit un signal (FS) d'erreur.

6. Procédé suivant la revendication 5,
**caractérisé en ce que**
à partir des lieux de localisation rendus vraisemblables des postes (BS1, BS2, BS3) de base et de leurs positions relatives déterminées par triangulation par rapport au véhicule, on détermine le lieu où se trouve le véhicule par triangulation, on le compare au lieu où se trouve le véhicule fourni par un capteur de localisation installé du côté du véhicule ferroviaire et, s'il y a un écart au-delà d'une mesure donnée à l'avance, on produit un signal (FS) d'erreur.

7. Procédé suivant l'une des revendications précédentes,
**caractérisé en ce qu'**
- on produit le signal (01) de localisation reposant sur la radioélectricité, à l'aide des valeurs de mesure de temps de parcours, par un premier dispositif de localisation,
- on produit un deuxième signal (O2) de localisation par un deuxième dispositif (300) de localisation, et
- en tirant parti du signal (01) de localisation reposant sur la radioélectricité et de l'autre signal (O2) de localisation, on forme un signal (Op) de localisation contrôlé.

8. Procédé suivant la revendication 7,
**caractérisé en ce que**
- le deuxième signal (O2) de localisation forme le signal (Op) de localisation contrôlé, si le signal (01) de localisation reposant sur la radioélectricité confirme la vraisemblance du deuxième signal (O2) de localisation, en particulier ne s'écarte pas de celui-ci au-delà d'une mesure donnée à l'avance, et
- on produit un signal (FS) d'erreur si le signal (01) de localisation reposant sur la radioélectricité ne confirme pas la vraisemblance du deuxième signal (O2) de localisation, en s'en écartant notamment au-delà d'une mesure donnée à l'avance.

9. Procédé suivant l'une des revendications précédentes,
**caractérisé en ce qu'**
- un ensemble de données comprend un ensemble (SDS) de données de voie ou est un ensemble (SDS) de données de voie, dans lequel, sur les voies de déplacement ou le lieu où se trouve le véhicule (10) ferroviaire, les valeurs de mesure de temps de parcours à escompter et les caractéristiques (K1, K2, K3) respectives à escompter des postes (BS1, BS2, BS3) de base sont mises en mémoire, on vérifie à chaque circulation du véhicule (10) ferroviaire et/ou on met à jour ces enregistrements d'ensembles de données en mettant en mémoire les enregistrements d'ensembles de données mis à jour, qui remplacent les enregistrements d'ensembles de données mis en mémoire auparavant, et
- lors de circulations à venir, on tire parti de l'ensemble de données vérifié et/ou mis à jour pour la formation du signal (01) de localisation reposant la radioélectricité.

10. Procédé suivant l'une des revendications précédentes,
**caractérisé en ce que**
- l'ensemble de données comprend un ensemble (LDS) de données de carte du pays ou est un ensemble (LDS) de données de carte du pays, dans lequel la position dans l'espace des postes (BS1, BS2, BS3) de base est enregistrée, à chaque circulation du véhicule (10) ferroviaire, on vérifie et/ou on met à jour, en mettant en mémoire les enregistrements d'ensembles de données mis à jour, qui remplacent les enregistrements d'ensembles de données mis en mémoire auparavant, et
- lors de circulations à venir, on tire parti de l'ensemble (LDS) de données de carte du pays mis en mémoire, vérifié et/ou mis à jour pour la formation du signal (01) de localisation reposant sur la radioélectricité.

11. Procédé suivant l'une des revendications précédentes,
**caractérisé en ce que**
le deuxième dispositif (300) de localisation est un dispositif de localisation par satellite.

12. Procédé suivant l'une des revendications précédentes,
**caractérisé en ce qu'**
on gère, dans l'ensemble (SDS) de données de voie ou dans l'ensemble (LDS) de données de carte du pays mis en mémoire du côté du véhicule, des caractéristiques supplémentaires, qui indiquent la fiabilité de la correction des données mis en mémoire se rapportant à la localisation, et qui sont influencées par les résultats de la détermination de la localisation, lors de circulations répétées sur une voie.

13. Procédé suivant l'une des revendications précédentes,
**caractérisé en ce que**
l'on répartit, sur d'autres véhicules ferroviaires, l'ensemble (SDS) de données de voie ou l'ensemble (LDS) de données de carte du pays établi du côté du véhicule, par un mécanisme de répartition on line ou off line, grâce à quoi ces véhicules peuvent, sur la base des données de localisation déjà mises en mémoire, créer immédiatement des données de localisation fiables.

14. Procédé suivant l'une des revendications précédentes,
**caractérisé en ce que**
des véhicules, qui sont équipés d'un ensemble (LDS) de données de carte du pays, ont circulés également sur des voies, qui n'entrent pas dans le cadre de la production de l'ensemble (LDS) de données de carte du pays, peuvent créer immédiatement des données de localisation fiables dans la mesure où la possibilité d'atteindre par technique radio certains postes (BS1, BS2, BS3) de base est donné dans l'ensemble (LDS) de données de carte du pays.

15. Procédé suivant l'une des revendications précédentes,
**caractérisé en ce que**
l'alimentation, nécessaire pour le procédé, en informations de temps de parcours peut s'effectuer à partir de l'infrastructure de téléphonie mobile sans modification ou extension des appareils de radio mobile et des interfaces présents.

16. Procédé suivant l'une des revendications précédentes,
**caractérisé en ce que**
l'on produit le signal (01) de localisation reposant sur la radioélectricité, en égalisant les valeurs de mesure de temps de parcours radios mesurés et les caractérisations (K1, K2, K3) des postes (BS1, BS2, BS3) de base correspondant avec un ensemble de données mis en mémoire, notamment un ensemble (SDS) de données de voie ou un ensemble (LDS) de données de carte du pays, dans lequel, sur les voies (20) de circulation ou le lieu (P0, P1, P2, ..., Pn) respectif où se trouve le véhicule (10) ferroviaire, les valeurs de mesure de temps de parcours à escompter et les caractérisations (K1, K2, K3) respectives à escompter des postes (BS1, BS2, BS3) sont enregistrés.

17. Procédé suivant la revendication 16,
**caractérisé en ce que**
l'on effectue un contrôle de vraisemblance, en soumettant en particulier le signal (01) de localisation reposant sur la radioélectricité à un contrôle de vraisemblance, dans lequel on contrôle si la séquence des temps de parcours des signaux (F(K1), F(K2), F(K3)) reçus et des caractérisations (K1, K2, K3) correspondantes des postes (BS1, BS2, BS3) de base coïncide avec la séquence mise en mémoire dans l'ensemble de données de temps de parcours et de caractérisations (K1, K2, K3) des postes (BS1, BS2, BS3) de base et, dans le cas où il y a un écart entre les séquences, au-delà d'une mesure donnée à l'avance, on produit un signal (FS) d'erreur.

18. Procédé suivant la revendication 17,
**caractérisé en ce que**
le contrôle de séquence comprend ceux en cours respectivement, ainsi qu'au moins 2, de préférence entre 2 et 10, temps de parcours ou les postes (BS1, BS2, BS3) de base respectivement antérieurs dans le temps.

19. Procédé suivant l'une des revendications précédentes,
**caractérisé en ce que**
l'on produit le signal (01) de localisation reposant sur la radioélectricité en soumettant des valeurs de mesure à un temps de parcours à un procédé de triangulation, en tirant parti d'un ensemble (LDS) de données de carte du pays mis en mémoire, dans lequel la position dans l'espace des postes (BS1, BS2, BS3) de base est enregistrée.

20. Procédé suivant la revendication 19,
**caractérisé en ce que**
l'on effectue un contrôle de vraisemblance, en soumettant en particulier le signal (01) de localisation reposant sur la radioélectricité à un contrôle de vraisemblance, dans lequel on contrôle si - individuellement par poste de base - les séquences des temps de parcours mesurés des signaux (F(K1), F(K2), F(K3)) radios coïncident avec les temps de parcours à escompter, suivant l'ensemble (LDS) de données de carte du pays et, dans le cas d'un écart entre les séquences, au-delà d'une mesure donnée à l'avance, on produit un signal (FS) d'erreur.

21. Procédé suivant la revendication 20,
**caractérisé en ce que**
le contrôle de séquence comprend les temps de parcours respectivement en cours, ainsi qu'au moins 2, de préférence entre 2 et 10, temps de parcours respectivement antérieurs dans le temps.

22. Procédé suivant l'une des revendications précédentes,
**caractérisé en ce qu'**
en tirant parti des valeurs de mesure de temps de parcours, on contrôle si les positions possibles du point de vue du temps de parcours des postes (BS1, BS2, BS3) de base coïncident avec les positions, enregistrées dans un ensemble (LDS) de données de carte du pays, des postes (BS1, BS2, BS3) respectifs et, dans le cas d'un écart au-delà d'une mesure donnée à l'avance, on produit un signal (FS) d'erreur.

23. Véhicule (10) ferroviaire comprenant un dispositif de localisation pour la production d'au moins un signal de localisation indiquant le lieu où se trouve un véhicule (10) ferroviaire,
dans lequel
- le véhicule (10) ferroviaire a un dispositif (200) d'analyse, qui détecte du côté du véhicule ferroviaire des valeurs de mesure de temps de parcours, qui indiquent le temps de parcours de signaux (F(K1), F(K2), F(K3)) radios entre un ou plusieurs postes (BS1, BS2, BS3) d'un ou de plusieurs réseaux cellulaires de radiocommunication mobile d'une part et un dispositif (100) radio mobile du véhicule (10) ferroviaire d'autre part, et
- le dispositif (200) d'analyse est constitué pour produire, à l'aide des valeurs de mesure de temps de parcours, un signal (01) de localisation reposant sur la radioélectricité, pour contrôler un signal (O2) de localisation d'un autre dispositif (300) de localisation et/ou pour contrôler l'authenticité du poste (BS1, BS2, BS3) ou des postes (BS1, BS2, BS3) de base envoyant les signaux (F(K1), F(K2), F(K3)) radios,
**caractérisé en ce que**
le dispositif d'analyse est agencé pour
- produire en continu le signal (01) de localisation reposant sur la radioélectricité à l'aide des valeurs de mesure de temps de parcours et à l'aide du signal (O2) de localisation d'un capteur (300) de localisation installé du côté du véhicule ferroviaire,
- contrôler le signal (01) de localisation reposant sur la radioélectricité, premièrement à l'aide d'un ensemble (SDS) de données de voie ou d'un ensemble (LDS) de données de carte du pays présent du côté du véhicule ferroviaire, grâce à quoi, d'une part on prouve que le signaux (F(K1), F(K2), F(K3)) radios reçus sont authentiques et d'autre part que le signal (O2) de localisation du capteur (300) installé du véhicule est correct,
- on utilise, deuxièmement, le signal (01) de localisation reposant sur la radioélectricité
∘ lors de la première circulation pour l'établissement ou
∘ lors de circulations répétées, en comparant des valeurs de mesure de temps de parcours au point de localisation respectif aux valeurs de mesure de temps de parcours déjà enregistré, pour la mise à jour
de l'ensemble (SDS) de données de voie ou de l'ensemble (LDS) de données de carte du pays présent du côté du véhicule ferroviaire, et
- pour disposer dans le véhicule du signal (01) de localisation reposant sur la radioélectricité, troisièmement pour des applications de la technique de sécurité.
